# EUROPEAN PATENT APPLICATION

(11) **EP 4 806 682 A1**
(43) Date of publication of application: **16.09.2026**
(21) Application number: 26156222.7
(22) Date of filing: 04.02.2026
(51) Int. Cl.: B60K 1/00

(54) **VEHICLE LOWER PORTION STRUCTURE**

(30) Priority: 10.03.2025 JP 2025037742
(71) Applicant: Toyota Jidosha Kabushiki Kaisha, Toyota-shi, Aichi-ken 471-8571 (JP)
(72) Inventor: NISHIKI, Nobuyasu, Toyota-shi, Aichi-ken, 471-8571 (JP)
(74) Representative: TBK

(57) **Abstract**

A vehicle lower portion structure has: a suspension member; a battery disposed at a vehicle rear side with respect to the suspension member; a first protected portion disposed between the battery and a vehicle transverse direction central portion of the suspension member; a second protected portion disposed between the battery and an outer portion that is at a vehicle transverse direction outer side with respect to the vehicle transverse direction central portion of the suspension member; a first protecting member connecting the vehicle transverse direction central portion and the battery; and a second protecting member connecting the outer portion and the battery.

## Description

### Cross-Reference to Related Application

This application claims priority under 35 USC 119 from Japanese Patent Application No. 2025-037742, filed on March 10, 2025, the disclosure of which is incorporated by reference herein.

### BACKGROUND

### Technical Field

The present disclosure relates to a vehicle lower portion structure.

### Related Art

Japanese Patent Application Laid-Open (JP-A) No. 2020-29245 discloses a structure in which connectors, which project out from a front end of a battery, are protected from flying stones and the like by a protecting member that connects a suspension member and the battery of a vehicle.

As disclosed in JP-A No. 2020-29245, there has been conceived of, in a vehicle lower portion structure in which a suspension member and a battery are connected by a protecting member, a structure that transmits load, which is inputted to the suspension member at the time of a front collision of the vehicle, to the battery by the protecting member.

In such a vehicle lower portion structure, it is desired to improve the transmission efficiency of load that is transmitted from the suspension member to the battery.

### SUMMARY

An object of the present disclosure is to provide a vehicle lower portion structure that improves the transmission efficiency of transmitting load, which is inputted to a suspension member at the time of a front collision of a vehicle, to a battery.

A vehicle lower portion structure relating to a first aspect has: a suspension member; a battery disposed at a vehicle rear side with respect to the suspension member; a first protected portion disposed between the battery and a vehicle transverse direction central portion of the suspension member; a second protected portion disposed between the battery and an outer portion that is at a vehicle transverse direction outer side with respect to the vehicle transverse direction central portion of the suspension member; a first protecting member connecting the vehicle transverse direction central portion and the battery, and having a connected distance along a vehicle longitudinal direction from a position of connection of the first protecting member with the vehicle transverse direction central portion to a position of connection of the first protecting member with the battery, which is a first distance, and that protects the first protected portion at a vehicle lower side with respect to the first protected portion; and a second protecting member connecting the outer portion and the battery, and having a connected distance along the vehicle longitudinal direction from a position of connection of the second protecting member with the outer portion to a position of connection of the second protecting member with the battery, which is a second distance that is shorter than the first distance, and that protects the second protected portion at a vehicle lower side with respect to the second protected portion, the second protecting member having a rigidity that is higher than a rigidity of the first protecting member.

In the vehicle lower portion structure relating to the first aspect, the first protecting member, which connects the battery and the vehicle transverse direction central portion of the suspension member, protects the first protected portion at the vehicle lower side with respect to the first protected portion. The connected distance along the vehicle longitudinal direction from the position of connection of the first protecting member with the vehicle transverse direction central portion to the position of connection of the first protecting member with the battery is a first distance.

The second protecting member, which connects the battery and the outer portion of the suspension member, protects the second protected portion at the vehicle lower side with respect to the second protected portion. The connected distance along the vehicle longitudinal direction from the position of connection of the second protecting member with the outer portion to the position of connection of the second protecting member with the battery is a second distance that is shorter than the first distance.

In the vehicle lower portion structure relating to the first aspect, the rigidity of the second protecting member, which has a shorter connected distance than the connected distance of the first protecting member, is higher than the rigidity of the first protecting member.

Therefore, load, which is inputted to the suspension member at the time of a front collision of the vehicle, passes through the second protecting member and is transmitted efficiently to the battery. Accordingly, in accordance with the vehicle lower portion structure of the first aspect, the transmission efficiency of transmitting the load, which is inputted to the suspension member at the time of a front collision of the vehicle, to the battery improves.

In a vehicle lower portion structure relating to a second aspect, the vehicle lower portion structure relating to the first aspect has an exhaust pipe disposed along a side of the battery at a side opposite a side at which the second protecting member is located, with respect to the first protecting member.

In accordance with the vehicle lower portion structure relating to the second aspect, the exhaust pipe can be disposed in a space where it does not interfere with the second protecting member and the second protected portion.

In a vehicle lower portion structure relating to a third aspect, in the first aspect or the second aspect, the second protecting member covers a low-voltage connector, which serves as the second protected portion, at a vehicle lower side with respect to the low-voltage connector, and the first protecting member covers a high-voltage connector, which serves as the first protected portion and at which current that is higher voltage than current outputted from the low-voltage connector is outputted, at a vehicle lower side with respect to the high-voltage connector.

In accordance with the vehicle lower portion structure relating to the third aspect, because a high-voltage connector is covered by the first protecting member that has a longer connected distance than the connected distance at the second protecting member, the degrees of freedom in routing the wire connected to the high-voltage connector is high.

In a vehicle lower portion structure relating to a fourth aspect, the vehicle lower portion structure relating to the third aspect has a connecting member connecting the first protecting member to the battery, wherein, at the connecting member, in a state in which a circuit, which is formed by a high-voltage wire connected to the high-voltage connector, is cut-off due to a plug, which is provided within the circuit, being detached from the circuit, connection between the first protecting member and the battery is cancelled by the plug.

In accordance with the vehicle lower portion structure relating to the fourth aspect, access to the high-voltage connector becomes possible firstly by cutting-off the circuit formed by the high-voltage wire.

In accordance with the vehicle lower portion structure of the present disclosure, the transmission efficiency of transmitting load, which is inputted to a suspension member at the time of a front collision of a vehicle, to a battery improves.

### BRIEF DESCRIPTION OF THE DRAWINGS

Exemplary embodiments will be described in detail based on the following figures, wherein:
Fig. 1 is a bottom view illustrating main portions of a vehicle relating to a present embodiment;
Fig. 2 is a bottom view illustrating a vehicle lower portion structure relating to the present embodiment, and is an enlarged view illustrating a portion of Fig. 1 in an enlarged manner;
Fig. 3 is a bottom view illustrating the vehicle lower portion structure relating to the present embodiment, and is a bottom view illustrating only outer edges of a first protecting member and a second protecting member;
Fig. 4 is a perspective view illustrating the vehicle lower portion structure relating to the present embodiment;
Fig. 5 is a rear sectional view illustrating a suspension member, the first protecting member and the second protecting member relating to the present embodiment; and
Fig. 6 is a perspective view illustrating a connecting member and a plug relating to the present embodiment.

### DETAILED DESCRIPTION

Examples of embodiments relating to the present disclosure are described hereinafter on the basis of the drawings.

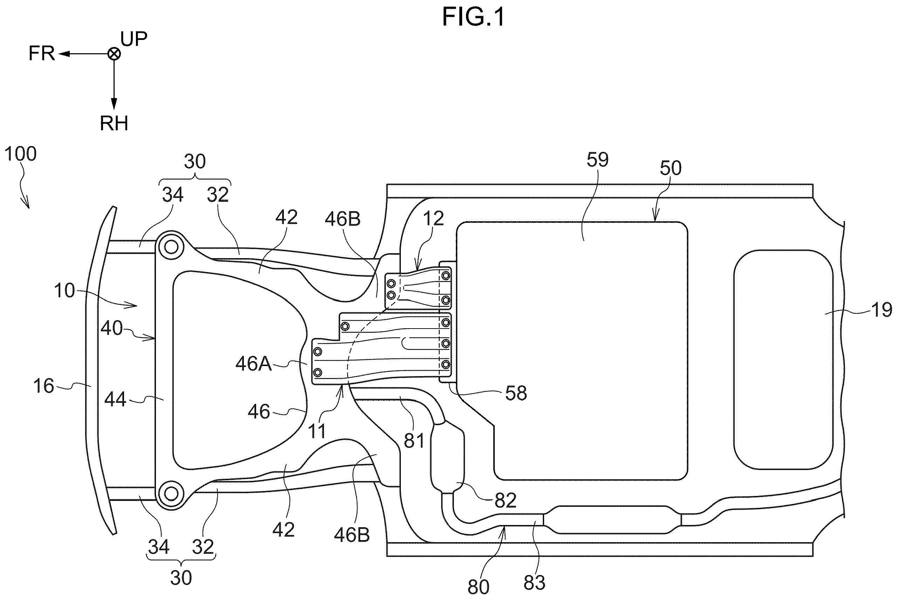

Fig. 1 is a bottom view illustrating main portions of a vehicle 100 relating to a present embodiment. Note that arrow FR, arrow UP and arrow RH in the drawings indicate the vehicle frontward direction, the vehicle upward direction and the vehicle rightward direction of a vehicle. When longitudinal, vertical and left-right directions are used in the following description without being specified, they refer to the longitudinal of the vehicle longitudinal direction, the vertical of the vehicle vertical direction and the left and right of the vehicle left-right direction (transverse direction), respectively. Further, the symbol in the drawings in which an X is inside a circle means an arrow directed from the near side toward the far side of the surface of the drawing.

As illustrated in Fig. 1, the vehicle 100 relating to the present embodiment has a bumper reinforcement 16, connecting portions 30, a fuel tank 19, and a vehicle lower portion structure 10. The vehicle 100 is, as an example, a plug-in hybrid electric vehicle (PHEV).

The bumper reinforcement 16 is a hollow, beam-shaped frame portion and extends along the vehicle transverse direction. For example, the bumper reinforcement 16 is slightly curved such that the vehicle transverse direction intermediate portion thereof becomes convex toward the vehicle front side as seen in a bottom view.

The connecting portions 30 are portions that connect the bumper reinforcement 16 and a suspension member 40, which is described later, at the vehicle lower portion structure 10. The connecting portion 30 has, for example, a front side member 32 and a crash box 34.

The front side members 32 are provided at the vehicle transverse direction both side portions of the vehicle front portion, and extend along the vehicle longitudinal direction.

The crash boxes 34 have the function of absorbing impact energy, and are provided at the vehicle front side end portions of the left and right front side members 32, respectively. The front end portions of the left and right crash boxes 34 are connected to the vehicle transverse direction both end portions of the bumper reinforcement 16, respectively.

In the present embodiment, load, which is inputted to the bumper reinforcement 16 at the time of a front collision of the vehicle 100, passes through the connecting portions 30 (specifically, the front side members 32 and the crash boxes 34) and is transmitted to the suspension member 40 that is described later.

The fuel tank 19 is disposed at the vehicle rear side of a battery 50, which is described later, at the vehicle lower portion structure 10.

### <Vehicle Lower Portion Structure 10>

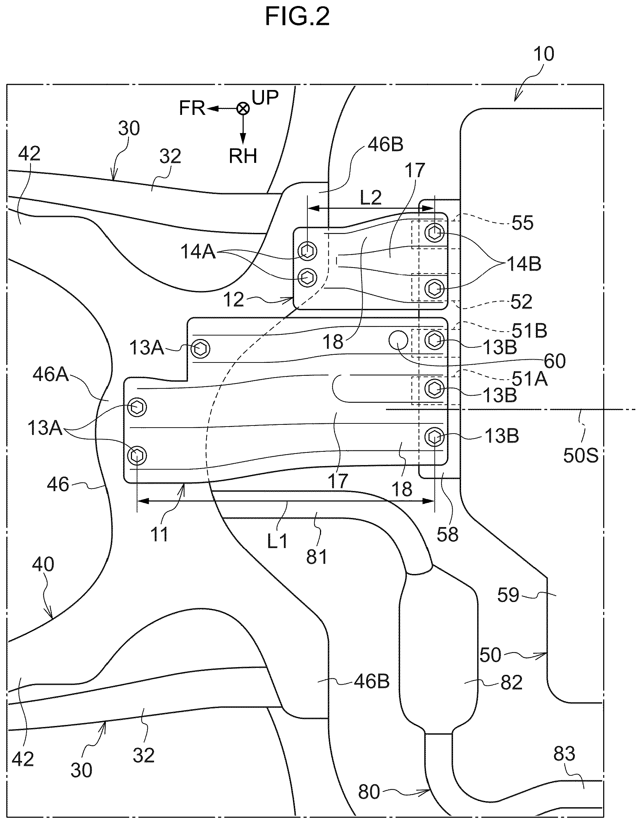

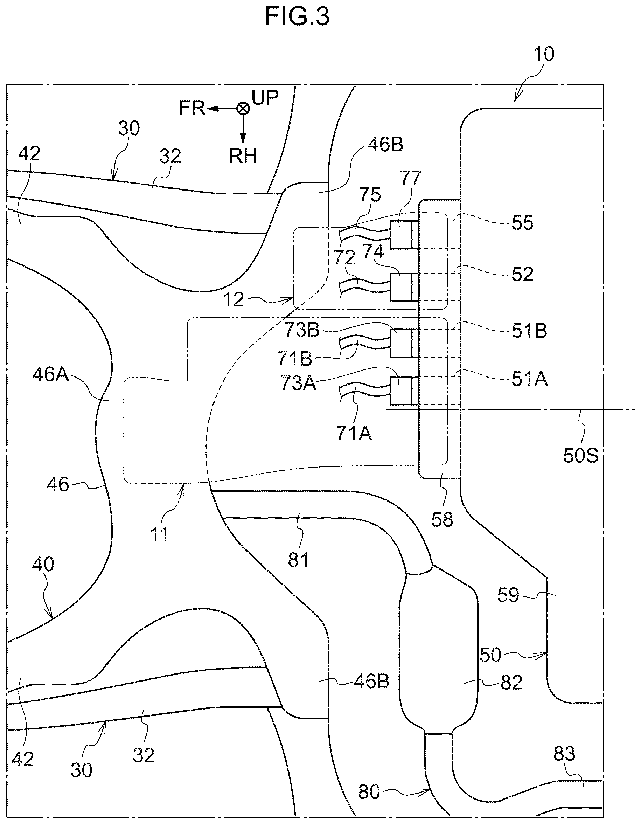

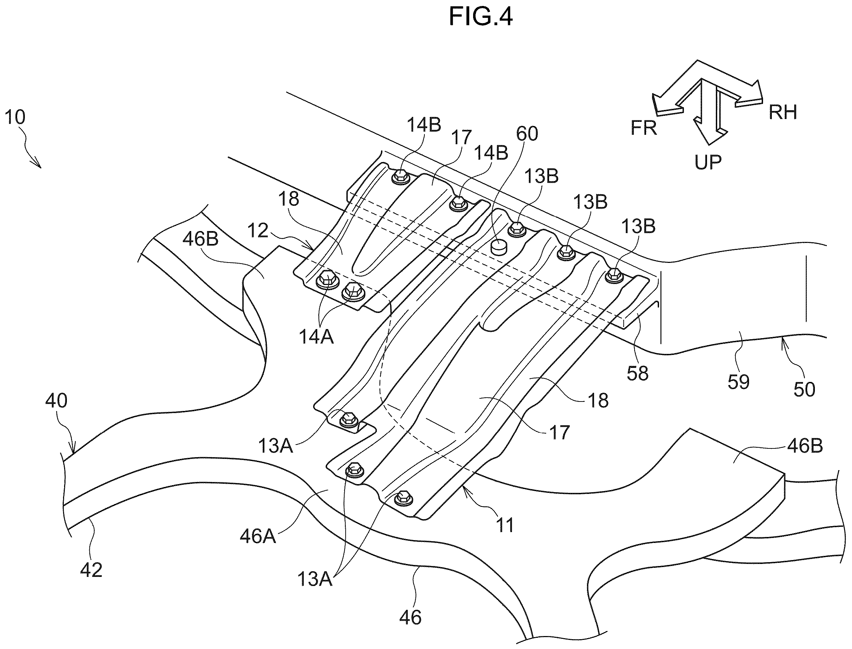

Fig. 2 and Fig. 3 are bottom views illustrating the vehicle lower portion structure 10, and are enlarged views illustrating portions of Fig. 1 in an enlarged manner. Note that only outer edges of a first protecting member 11 and a second protecting member 12 that are described later are illustrated in Fig. 3. Fig. 4 is a perspective view illustrating the vehicle lower portion structure 10.

As illustrated in Fig. 1, Fig. 2 and Fig. 3, the vehicle lower portion structure 10 of the present embodiment has the suspension member 40, the battery 50, the first protecting member 11, the second protecting member 12, and an exhaust pipe 80.

The suspension member 40 is disposed at the lower side with respect to the front side members 32 and is connected to the front side members 32. As illustrated in Fig. 1, the suspension member 40 has a pair of side members 42, a front cross member 44 and a rear cross member 46.

The pair of side members 42 form the side portions at the both sides of the suspension member 40. The pair of side members 42 extend along the vehicle longitudinal direction at the vehicle transverse direction left and right both sides. The front cross member 44 forms the front portion of the suspension member 40. The front cross member 44 extends along the vehicle transverse direction, and connects the vehicle front side end portions of the pair of side members 42 together.

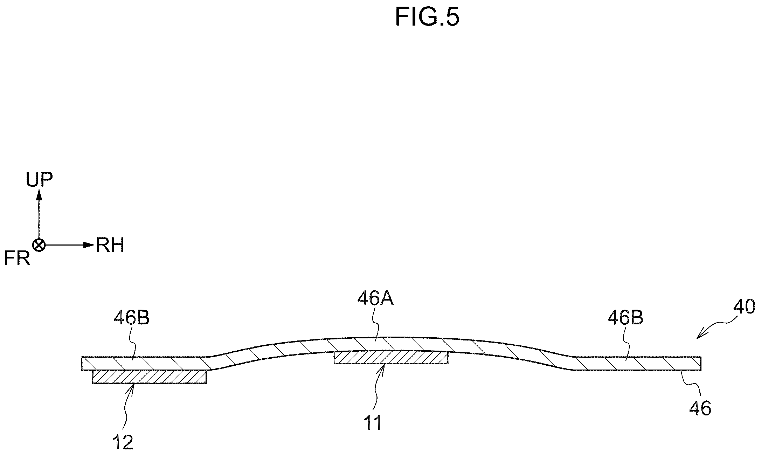

The rear cross member 46 forms the rear portion of the suspension member 40. The rear cross member 46 extends along the vehicle transverse direction, and connects the vehicle rear side end portions of the pair of side members 42 together. As illustrated in Fig. 5, the rear cross member 46 is formed in the shape of an arch whose vehicle transverse direction central portion 46A is convex toward the vehicle upper side. Further, as illustrated in Fig. 2 and Fig. 3, as seen in a bottom view for example, the rear cross member 46 is gently curved such that the vehicle transverse direction central portion 46A is convex toward the vehicle front side. Accordingly, at the rear cross member 46, outer portions 46B that are at the vehicle transverse direction outer sides with respect to the vehicle transverse direction central portion 46 are disposed at the vehicle rear side with respect to the vehicle transverse direction central portion 46A.

As illustrated in Fig. 1, the suspension member 40 is formed in a substantially rectangular frame shape as seen in a bottom view, by the pair of side members 42, the front cross member 44 and the rear cross member 46. The suspension member 40 is a frame portion that, for example, supports the suspension (not illustrated) of the vehicle 100, and supports the power unit (not illustrated) from the lower side.

The battery 50 is disposed at the vehicle rear side with respect to the rear cross member 46 of the suspension member 40. The battery 50 is disposed at the lower side of the floor panel (not illustrated) of the vehicle 100. The battery 50 outputs electric power that can be used to drive an electric motor (not illustrated) that serves as the driving source for traveling and is installed in the vehicle 100.

The battery 50 has a battery case 59. The battery case 59 is formed in the shape of a substantially rectangular box. A battery module (not illustrated), in which plural battery elements (not illustrated) are connected in series or in parallel, is accommodated within the battery case 59.

As illustrated in Fig. 2 and Fig. 3, high-voltage connectors 51A, 51B are disposed between the vehicle transverse direction central portion 46A of the rear cross member 46 and the battery 50. In the present embodiment, the high-voltage connectors 51A, 51B are provided at the front portion of the battery 50, at the rear side with respect to the vehicle transverse direction central portion 46A. Specifically, for example, the high-voltage connectors 51A, 51B project out toward the front side from the front surface of the battery case 59 of the battery 50.

A low-voltage connector 52 and a DC connector 55 are disposed between the battery 50 and the outer portion 46B at the left side of the rear cross member 46 (hereinafter called left side portion 46B). In the present embodiment, the low-voltage connector 52 and the DC connector 55 are provided at the front portion of the battery 50, at the rear side with respect to the left side portion 46B. Specifically, for example, the low-voltage connector 52 and the DC connector 55 project out toward the front side from the front surface of the battery case 59 of the battery 50.

The high-voltage connectors 51A, 51B, the low-voltage connector 52 and the DC connector 55 are offset toward the vehicle transverse direction left side with respect to vehicle transverse direction center 50S of the battery 50. Namely, the high-voltage connectors 51A, 51B, the low-voltage connector 52 and the DC connector 55 are provided so as to be offset toward the left side of the battery 50.

The high-voltage connectors 51A, 51B are terminals at which high-voltage current is outputted from the battery 50. The low-voltage connector 52 is a terminal at which low-voltage current is outputted from the battery 50. Current of a lower voltage than the current outputted from the high-voltage connectors 51A, 51B is outputted from the low-voltage connector 52. The DC connector 55 is a terminal at which direct current is outputted from the battery 50.

As illustrated in Fig. 3, connectors 73A, 73B, which are connected to high-voltage wires 71A, 71B, are connected to the high-voltage connectors 51A, 51B. A connector 74, which is connected to a low-voltage wire 72, is connected to the low-voltage connector 52. A connector 77, which is connected to an electrical wire 75, is connected to the DC connector 55.

Note that the high-voltage connectors 51A, 51B are an example of the first protected portion. The low-voltage connector 52 and the DC connector 55 are an example of the second protected portion. The vehicle transverse direction left side is an example of the vehicle transverse direction outer side.

The first protecting member 11 and the second protecting member 12 are plate members that are elongated in the vehicle longitudinal direction, and are molded by pressing for example. As illustrated in Fig. 2 and Fig. 4, plural convex portions 17 and concave portions 18, which project out or are recessed in the thickness direction, are formed in the first protecting member 11 and the second protecting member 12. All of the convex portions 17 and the concave portions 18 extend in the vehicle longitudinal direction. Further, the convex portions 17 and the concave portions 18 are lined-up alternately.

The first protecting member 11 connects the vehicle transverse direction central portion 46A of the rear cross member 46 and the battery 50. The front portion of the first protecting member 11 is connected by fastening by fastening members 13A for example to the vehicle transverse direction central portion 46A of the rear cross member 46. In the present embodiment, the front portion of the first protecting member 11 is connected to the bottom surface of the vehicle transverse direction central portion 46A at plural positions (e.g., three positions). Further, as illustrated in Fig. 2, the positions of the front portion of the first protecting member 11 that are connected to the rear cross member 46 may be offset in the vehicle longitudinal direction. In the example illustrated in Fig. 2, among the plural positions of connection, some (e.g., the one connection position at the left side) are disposed further toward the vehicle rear side than others (e.g., the two connection positions at the right side).

The rear portion of the first protecting member 11 is connected by fastening by fastening members 13B for example to the front portion of the battery case 59. In the present embodiment, the rear portion of the first protecting member 11 is connected at plural positions (e.g., three positions) to the bottom surface of a flange 58 that juts-out toward the vehicle front side from the front portion of the battery case 59.

The connected distance along the vehicle longitudinal direction from the position of connection of the first protecting member 11 with the vehicle transverse direction central portion 46A to the position of connection of the first protecting member 11 with the battery 50 is first distance L1 (see Fig. 2). Note that, in a case in which there are plural positions of connection, the first distance is the longest distance. Further, the positions of connection are the positions of the longitudinal direction centers of the connecting members such as the fastening members.

Note that, in the present embodiment, the dimension of the first protecting member 11 along the vehicle transverse direction is larger at the front portion than at the rear portion thereof. Further, the dimension of the first protecting member 11 along the vehicle longitudinal direction is larger at the right portion than at the left portion thereof.

The first protecting member 11 covers the high-voltage connectors 51A, 51B at the vehicle lower side with respect to the high-voltage connectors 51A, 51B. Namely, the first protecting member 11 protects the high-voltage connectors 51A, 51B from input from the road (e.g., flying stones).

The second protecting member 12 connects the left side portion 46B of the rear cross member 46 and the battery 50, at the vehicle transverse direction left side with respect to the first protecting member 11. The front portion of the second protecting member 12 is connected to the left side portion 46B of the rear cross member 46 by fastening by fastening members 14A for example. In the present embodiment, the front portion of the second protecting member 12 is connected to the bottom surface of the left side portion 46B at plural positions (e.g., two positions).

The rear portion of the second protecting member 12 is connected by fastening by fastening members 14B for example to the front portion of the battery case 59. In the present embodiment, the rear portion of the second protecting member 12 is connected to the bottom surface of the flange 58 at plural positions (e.g., two positions).

The connected distance along the vehicle longitudinal direction from the position of connection of the second protecting member 12 with the left side portion 46B to the position of connection of the second protecting member 12 with the battery 50 is second distance L2 (see Fig. 2) that is shorter than the first distance L1. Note that, in a case in which there are plural positions of connection, the second distance is the longest distance. Further, the positions of connection are the positions of the longitudinal direction centers of the connecting members such as the fastening members.

The vehicle longitudinal direction dimension of the second protecting member 12 is shorter than the vehicle longitudinal direction dimension of the first protecting member 11. Note that, at the second protecting member 12, the interval in the vehicle transverse direction between the two positions of connection by the fastening members 14B is wider than that of the two positions of connection by the fastening members 14A.

In the present embodiment, the dimension of the second protecting member 12 along the vehicle transverse direction is larger at the rear portion than at the front portion thereof. Further, the dimension of the second protecting member 12 along the vehicle longitudinal direction is equal at the right portion and the left portion thereof.

The second protecting member 12 covers the low-voltage connector 52 and the DC connector 55 at the vehicle lower side with respect to the low-voltage connector 52. Namely, the second protecting member 12 protects the low-voltage connector 52 and the DC connector 55 from flying stones from the road and the like.

Further, the rigidity of the second protecting member 12 is higher than that of the first protecting member 11. In other words, it is more difficult for the second protecting member 12 to deform with respect to load from the vehicle front side than the first protecting member 11. The rigidity of the second protecting member 12 is increased by, for example, making the thickness of the second protecting member 12 thicker than that of the first protecting member 11. In this case, the second protecting member 12 and the first protecting member 11 can be structured by, for example, plate members that are formed of the same material. Note that the rigidity of the second protecting member 12 may be increased by using, for the second protecting member 12, a material having a higher rigidity (Young's modulus) than the rigidity of the material used for the first protecting member 11. In this case, the thicknesses of the plate members used for the second protecting member 12 and the first protecting member 11 can be made to be equal.

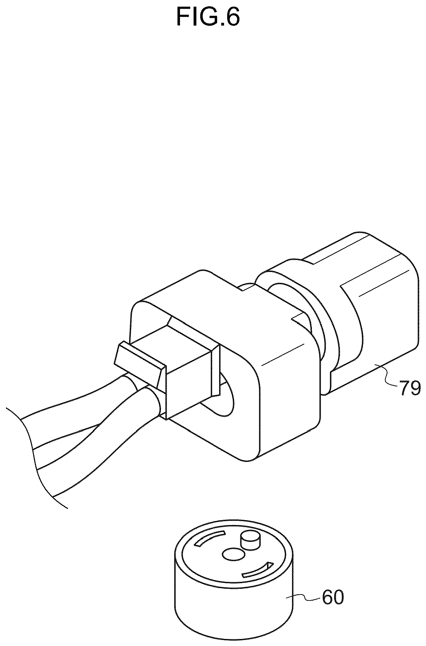

As illustrated in Fig. 2, Fig. 4 and Fig. 6, the vehicle lower portion structure 10 has a connecting member 60 that connects the first protecting member 11 to the battery 50. The connecting member 60 is disposed in a vicinity of the fastening member 13B. The connecting member 60 has an interlocking function. Specifically, for example, the connecting member 60 can, as a tool, detach a plug 79 (see Fig. 6) that divides the high-voltage wire 71B that is connected to the high-voltage connector 51B.

Power is supplied to the high-voltage wire 71B via the plug 79 that is provided in a circuit, and is cut-off by disconnecting the plug 79 from the circuit. The plug 79 functions as a key that releases the locking of the connecting member 60. In the present embodiment, by disconnecting the plug 79, the circuit formed by the high-voltage wire 71B is cut-off, and, in the state in which the circuit is cut-off, by removing the connecting member 60 by the plug 79 and cancelling the connection by the connecting member 60, access to the high-voltage connector 51B becomes possible.

As illustrated in Fig. 1 and Fig. 2, the exhaust pipe 80 is disposed along the side of the battery (specifically, the right side) that is at the side (specifically, the vehicle right side) opposite the side at which the second protecting member 12 is located, with respect to the first protecting member 11. The exhaust pipe 80 has a front side portion 81, an intermediate portion 82 and a rear side portion 83. The front side portion 81 is at the vehicle front side of the battery 50, and extends toward the vehicle rear side at the right side of the first protecting member 11.

The intermediate portion 82 is the portion disposed at the vehicle rear side (downstream side) with respect to the front side portion 81. The intermediate portion 82 extends toward the vehicle right side from the rear end portion of the front side portion 81. The rear side portion 83 is the portion disposed at the vehicle rear side (downstream side) with respect to the intermediate portion 82. The rear side portion 83 extends toward the vehicle rear side from the right end portion of the intermediate portion 82. The rear side portion 83 is disposed adjacent to the right side of the battery 50.

### <Operation>

Operation of the vehicle lower portion structure 10 relating to the present embodiment is described next.

As illustrated in Fig. 2 and Fig. 3, in the vehicle lower portion structure 10 relating to the present embodiment, the first protecting member 11, which connects the vehicle transverse direction central portion 46A of the suspension member 40 and the battery 50, protects the high-voltage connectors 51A, 51B at the vehicle lower side with respect to the high-voltage connectors 51A, 51B. Due thereto, the high-voltage connectors 51A, 51B are protected from input from the road (e.g., flying stones).

The second protecting member 12, which connects the left side portion 46B of the suspension member 40 and the battery 50, protects the low-voltage connector 52 and the DC connector 55 at the vehicle lower side with respect to the low-voltage connector 52 and the DC connector 55. Due thereto, the low-voltage connector 52 and the DC connector 55 are protected from input from the road (e.g., flying stones).

Here, the connected distance along the vehicle longitudinal direction from the position of connection of the first protecting member 11 with the vehicle transverse direction central portion 46A to the position of connection of the first protecting member 11 with the battery 50 is the first distance L1 (see Fig. 2). On the other hand, the connected distance along the vehicle longitudinal direction from the position of connection of the second protecting member 12 with the left side portion 46B to the position of connection of the second protecting member 12 with the battery 50 is the second distance L2 (see Fig. 2) that is shorter than the first distance.

Further, at the vehicle lower portion structure 10 relating to the present embodiment, the rigidity of the second protecting member 12, whose connected distance is shorter than the connected distance of the first protecting member 11, is higher than the rigidity of the first protecting member 11.

Therefore, the load, which is inputted to the suspension member 40 at the time of a front collision of the vehicle 100, passes through the second protecting member 12 and is transmitted efficiently to the battery 50. Accordingly, in accordance with the vehicle lower portion structure 10 of the present embodiment, the transmission efficiency of transmitting, to the battery 50, the load inputted to the suspension member 40 at the time of a front collision of the vehicle 100 improves.

Further, in the present embodiment, the exhaust pipe 80 is disposed along the side of the battery 50 (specifically, the right side) that is at the side (specifically, the vehicle right side) opposite the side at which the second protecting member 12 is located, with respect to the first protecting member 11.

Therefore, the exhaust pipe 80 can be disposed in a space where it does not interfere with the second protecting member 12 and the low-voltage connector 52 and the DC connector 55.

Moreover, in the present embodiment, the first protecting member 11 covers the high-voltage connectors 51A, 51B at the vehicle lower side with respect to the high-voltage connectors 51A, 51B.

Because the high-voltage connectors 51A, 51B are covered by the first protecting member 11 that has a longer connected distance than the connected distance at the second protecting member 12, the degrees of freedom in routing the wires (e.g., the high-voltage wires 71A, 71B) that are connected to the high-voltage connectors 51A, 51B is high.

Further, in the present embodiment, the connection between the first protecting member 11 and the battery 50 by the connecting member 60 is cancelled by the plug 79 in the state in which the circuit, in which the plug 79 is provided and which is formed by the high-voltage wire 71B that is connected to the high-voltage connector 51B, is cut-off due to the plug 79 being detached from the circuit.

Accordingly, in accordance with the present embodiment, access to the high-voltage connector 51B becomes possible firstly by cutting-off the circuit formed by the high-voltage wire 71B.

### <Modified Examples>

In the present embodiment, the vehicle 100 is a plug-in hybrid electric vehicle (PHEV) as an example, but the present disclosure is not limited to this. The vehicle 100 may be, for example, a hybrid electric vehicle (HEV) or a battery electric vehicle (BEV), and the present invention can be applied to vehicles having a battery at the vehicle lower portion thereof.

Further, in the present embodiment, the first protecting member 11 protects the high-voltage connectors 51A, 51B that serve as an example of the first protected portion, but the present disclosure is not limited to this. Examples of the first protected portion include a low-voltage connector and a DC connector, and other parts, and parts that can be objects of protection.

Moreover, in the present embodiment, the second protecting member 12 protects the low-voltage connector 52 and the DC connector 55 that serve as an example of the second protected portion, but the present disclosure is not limited to this. Examples of the second protected portion include high-voltage connectors, and other parts, and parts that can be objects of protection.

## Claims

1. A vehicle lower portion structure, comprising:
a suspension member;
a battery disposed at a vehicle rear side with respect to the suspension member;
a first protected portion disposed between the battery and a vehicle transverse direction central portion of the suspension member;
a second protected portion disposed between the battery and an outer portion that is at a vehicle transverse direction outer side with respect to the vehicle transverse direction central portion of the suspension member;
a first protecting member connecting the vehicle transverse direction central portion and the battery, and having a connected distance, along a vehicle longitudinal direction from a position of connection of the first protecting member with the vehicle transverse direction central portion to a position of connection of the first protecting member with the battery, which is a first distance, and that protects the first protected portion at a vehicle lower side with respect to the first protected portion; and
a second protecting member connecting the outer portion and the battery, and having a connected distance, along the vehicle longitudinal direction from a position of connection of the second protecting member with the outer portion to a position of connection of the second protecting member with the battery, which is a second distance that is shorter than the first distance, and that protects the second protected portion at a vehicle lower side with respect to the second protected portion, the second protecting member having a rigidity that is higher than a rigidity of the first protecting member.

2. The vehicle lower portion structure of claim 1, comprising an exhaust pipe disposed along a side of the battery at a side opposite a side at which the second protecting member is located, with respect to the first protecting member.

3. The vehicle lower portion structure of claim 1 or claim 2, wherein:
the second protecting member covers a low-voltage connector, which serves as the second protected portion, at a vehicle lower side with respect to the low-voltage connector, and
the first protecting member covers a high-voltage connector, which serves as the first protected portion and at which current that is higher voltage than current outputted from the low-voltage connector is outputted, at a vehicle lower side with respect to the high-voltage connector.

4. The vehicle lower portion structure of claim 3, comprising a connecting member connecting the first protecting member to the battery, wherein:
at the connecting member, in a state in which a circuit, which is formed by a high-voltage wire connected to the high-voltage connector, is cut-off due to a plug, which is provided within the circuit, being detached from the circuit, connection between the first protecting member and the battery is cancelled by the plug.
